# EUROPEAN PATENT APPLICATION

(11) **EP 4 459 816 A1**
(43) Date of publication of application: **06.11.2024**
(21) Application number: 23171744.8
(22) Date of filing: 05.05.2023
(51) Int. Cl.: H02B 1/56

(54) **LOW OR MEDIUM VOLTAGE SWITCHGEAR**

(71) Applicant: ABB SCHWEIZ AG, 5400 Baden (CH)
(72) Inventor: NOVAK, Ondrej, 691 06 Velké Pavlovice (CZ)
(74) Representative: Maiwald GmbH

(57) **Abstract**

The present invention relates to a low or medium voltage switchgear, comprising:
- a first compartment (20, 40);
- a second compartment (30); and
- an air conduit or duct (110, 120);

wherein an air intake or vent (60, 90) is located in an outer wall of the first compartment (20, 40), and wherein the outer wall separates the first compartment from ambient;
wherein an air intake or vent (130, 140) is located in a wall of the second compartment (30), and wherein the wall separates the second compartment from the first compartment;
wherein an opening at a first end of the air conduit or duct (110, 120) is positioned around the air intake or vent (60, 90) located in the outer wall of the first compartment (20, 40); and
wherein an opening at a second end of the air conduit or duct (110, 120) is positioned around the air intake or vent (130, 140) located in the wall of the second compartment (30).

## Description

### FIELD OF THE INVENTION

The present invention relates to low or medium voltage switchgears.

### BACKGROUND OF THE INVENTION

In switchgear, conductors inside the switchgear generate heat when conducting current due to Joule heating.

Cooling is then an important design consideration, where heat generated by conductors needs to be removed

Efficient cooling to remove heat, means that the size of conductors can be reduced, saving material and cost, and components can be cooled mitigating their overheating

In low and medium voltage applications, cooling is performed through utilization of a series of flaps and openings that allow cold air to enter switchgear compartments. Another series of flaps and openings than lets hot air leave the switchgear.

In some situations a compartment can be located at a position within the switchgear, where no fresh cold air can flow into this compartment. To enforce the cooling effect in such a situation, ventilation flaps can be used to circulate and ventilate the compartment located in this position.

For example, a busbar compartment can be located within a switchgear, adjacent to a circuit breaker compartment and/or adjacent to a cable connection compartment. The busbar compartment may have no wall that is at an outer wall of the switchgear, and/or air entering the switchgear can only do so through an outer wall of the circuit breaker compartment and/or through an outer wall of the cable connection compartment. In this situation, then air that enters the busbar compartment has already been heating due to passage through the circuit breaker compartment or cable connection compartment. As the air has already been heated, the cooling effect it has is diminished.

There is a need to address these issues.

### SUMMARY OF THE INVENTION

Therefore, it would be advantageous to have an improved switchgear.

The object of the present invention is solved with the subject matter of the independent claims, wherein further embodiments are incorporated in the dependent claims.

In a first aspect, there is provided a low or medium voltage switchgear, comprising:
- a first compartment;
- a second compartment; and
- an air conduit or duct.

An air intake or vent is located in an outer wall of the first compartment, and the outer wall separates the first compartment from ambient. An air intake or vent is located in a wall of the second compartment, and the wall separates the second compartment from the first compartment. An opening at a first end of the air conduit or duct is positioned around the air intake or vent located in the outer wall of the first compartment. An opening at a second end of the air conduit or duct is positioned around the air intake or vent located in the wall of the second compartment.

In an example, the switchgear is configured to enable ambient air from outside the switchgear to enter the air intake or vent located in the outer wall of the first compartment, pass through the air conduit or duct, and exit through the intake or vent located in a wall of the second compartment to enter the second compartment.

In an example, the switchgear is configured to enable ambient air from outside the switchgear to enter the air intake or vent located in the outer wall of the first compartment, pass through the air conduit or duct, and exit through the intake or vent located in a wall of the second compartment to enter the second compartment without entering a part of the first compartment surrounding the air conduit or duct.

In an example, the opening at the first end of the air conduit or duct is positioned around and makes an air tight seal around the air intake or vent located in the outer wall of the first compartment.

In an example, the opening at the second end of the air conduit or duct is positioned around and makes an air tight seal around the air intake or vent located in the wall of the second compartment.

In an example, a wall of the air conduit or duct between the first end of the air conduit or duct and the second end of the air conduit or duct is air tight.

In an example, the wall of the air conduit or duct between the first end of the air conduit or duct and the second end of the air conduit or duct comprises a thermal insulation material and/or electrical insulation material.

In an example, an air intake or vent is located in a wall of the second compartment, and the wall separates the second compartment from ambient.

In an example, an air intake or vent is located in a wall of the second compartment, and the wall separates the second compartment from a third compartment (50).

In a second aspect, there is provided a low or medium voltage switchgear, comprising:
- a first compartment;
- a second compartment;
- a third compartment;
- a first air conduit or duct; and
- a second air conduit or duct.

An air intake or vent is located in an outer wall of the first compartment, and the outer wall separates the first compartment from ambient. An air intake or vent is located in an outer wall of the second compartment, and the outer wall separates the second compartment from ambient. An air intake or vent is located in a wall of the third compartment, and the wall separates the third compartment from the first compartment. An air intake or vent is located in a wall of the third compartment, and the wall separates the third compartment from the second compartment. An opening at a first end of the first air conduit or duct is positioned around the air intake or vent located in the outer wall of the first compartment. An opening at a first end of the second air conduit or duct is positioned around the air intake or vent (90) located in the outer wall of the second compartment. An opening at a second end of the first air conduit or duct is positioned around the air intake or vent located in the wall of the third compartment that separates the third compartment from the first compartment. An opening at a second end of the second air conduit or duct is positioned around the air intake or vent located in the wall of the third compartment (30) that separates the third compartment from the second compartment.

In an example, the switchgear is configured to enable ambient air from outside the switchgear to enter the air intake or vent located in the outer wall of the first compartment, pass through the first air conduit or duct, and exit through the intake or vent located in the wall of the third compartment that separates the third compartment from the first compartment to enter the third compartment.

In an example, the switchgear is configured to enable ambient air from outside the switchgear to enter the air intake or vent located in the outer wall of the second compartment, pass through the second air conduit or duct, and exit through the intake or vent located in the wall of the third compartment that separates the third compartment from the second compartment to enter the third compartment.

In an example, the opening at the first end of the first air conduit or duct is positioned around and makes an air tight seal around the air intake or vent located in the outer wall of the first compartment.

In an example, the opening at the first end of the second air conduit or duct is positioned around and makes an air tight seal around the air intake or vent located in the outer wall of the second compartment.

In an example, the opening at the second end of the first air conduit or duct is positioned around and makes an air tight seal around the air intake or vent located in the wall of the third compartment that separates the third compartment from the second compartment.

In an example, the opening at the second end of the second air conduit or duct is positioned around and makes an air tight seal around the air intake or vent located in the wall of the third compartment that separates the third compartment from the second compartment.

In an example, a wall of the first air conduit or duct between the first end of the first air conduit or duct and the second end of the first air conduit or duct is air tight.

In an example, a wall of the second air conduit or duct between the first end of the second air conduit or duct and the second end of the second air conduit or duct is air tight

In an example, the wall of the first air conduit or duct between the first end of the first air conduit or duct and the second end of the first air conduit or duct comprises a thermal insulation material and/or electrical insulation material.

In an example, the wall of the second air conduit or duct between the first end of the second air conduit or duct and the second end of the second air conduit or duct comprises a thermal insulation material and/or electrical insulation material

In an example, an air intake or vent is located in a wall of the third compartment, and the wall separates the third compartment from ambient.

In an example, an air intake or vent is located in a wall of the third compartment, and the wall separates the third compartment from a fourth compartment.

The above aspect and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows a known switchgear design;
Fig. 2 shows a known switchgear design;
Fig. 3 shows a new switchgear design; and
Fig. 4 shows a new switchgear design.

### DETAILED DESCRIPTION OF EMBODIMENTS

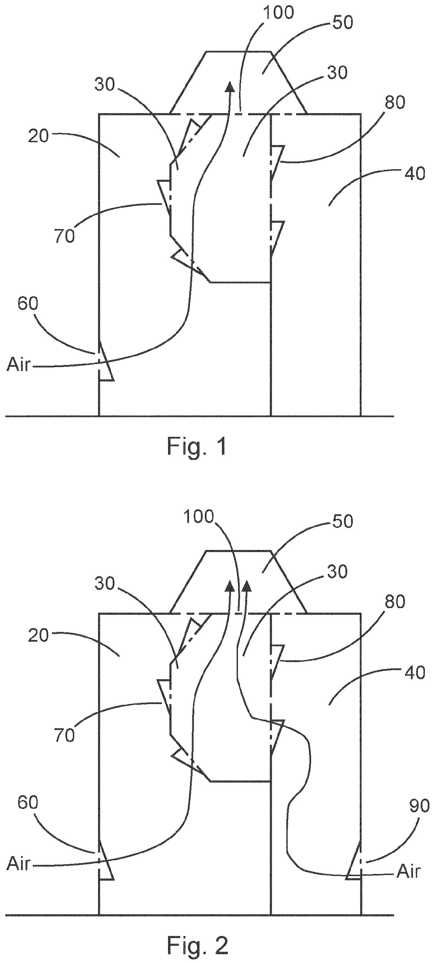

Fig. 1 shows an example of a known switchgear design. The switchgear has a first compartment 20, which can be a circuit breaker department. The switchgear also has a second compartment 40, which can be a cable connection compartment. The switchgear also has a third compartment 30, which can be a busbar compartment. A vent or intake flap 60 in the wall of the first compartment permits the entry of cold air to the switchgear. This air cools the first compartment 20 and the components therein, cools the third compartment 30 by flowing through vents or flaps 70 in the wall of the third compartment separating the first compartment, and cools the second compartment 40 by flowing through vents of flaps 80 in the wall of the third compartment separating the second compartment. The air can also flow from the third compartment 30 into a further compartment 50 via a vent or flap 100, and can then flow to ambient by passing through another vent of flap in an outer wall of switchgear.

As shown in Fig. 2, another example of a known switchgear has another vent or intake flap 90 in the wall of the second compartment 40 to provide for increased air flow into the switchgear to increase the cooling effect.

However, the problem with these designs is that the air that cools the third compartment 30 and the components therein has already been heater before it enters the third compartment 30, and the cooling effect is diminished.

The inventors came up with the following new designs to overcome this problem.

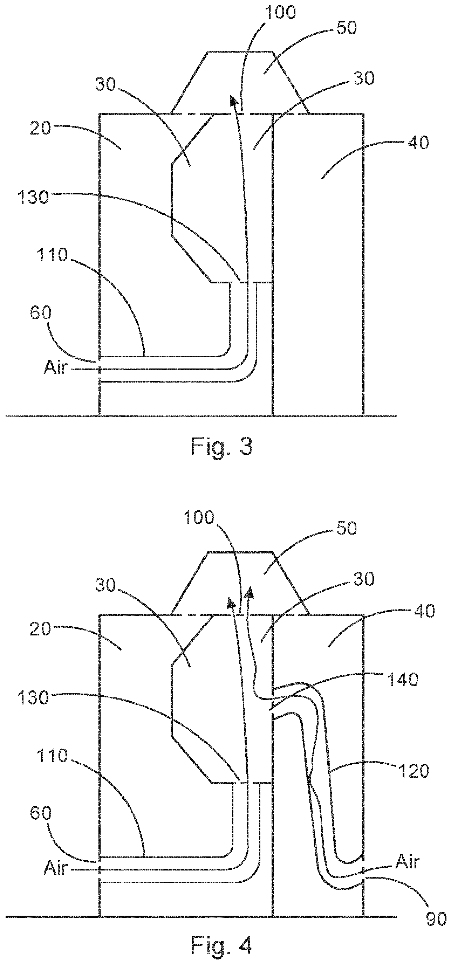

Figs. 3-4 relate to new designs of switchgear.

In an example, a new design of low, or medium voltage switchgear comprises:
- a first compartment 20, 40;
- a second compartment 30; and
- an air conduit or duct 110, 120.

An air intake or vent 60, 90 is located in an outer wall of the first compartment 20, 40, and the outer wall separates the first compartment from ambient. An air intake or vent 130, 140 is located in a wall of the second compartment 30, and the wall separates the second compartment from the first compartment. An opening at a first end of the air conduit or duct 110, 120 is positioned around the air intake or vent 60, 90 located in the outer wall of the first compartment 20, 40. An opening at a second end of the air conduit or duct 110, 120 is positioned around the air intake or vent 130, 140 located in the wall of the second compartment 30.

According to an example, the switchgear is configured to enable ambient air from outside the switchgear to enter the air intake or vent 60, 90 located in the outer wall of the first compartment 20, 40, pass through the air conduit or duct 110, 120, and exit through the intake or vent 130, 140 located in a wall of the second compartment 30 to enter the second compartment 30

According to an example, the switchgear is configured to enable ambient air from outside the switchgear to enter the air intake or vent 60, 90 located in the outer wall of the first compartment 20, 40, pass through the air conduit or duct 110, 120, and exit through the intake or vent 130, 140 located in a wall of the second compartment 30 to enter the second compartment 30 without entering a part of the first compartment 20, 40 surrounding the air conduit or duct 110, 120.

According to an example, the opening at the first end of the air conduit or duct 110, 120 is positioned around and makes an air tight seal around the air intake or vent 60, 90 located in the outer wall of the first compartment 20, 40.

According to an example, the opening at the second end of the air conduit or duct 110, 120 is positioned around and makes an air tight seal around the air intake or vent 130, 140 located in the wall of the second compartment 30.

Switchgear according to any of claims 1-5, wherein a wall of the air conduit or duct (110, 120) between the first end of the air conduit or duct (110, 120) and the second end of the air conduit or duct (110, 120) is air tight.

According to an example, the wall of the air conduit or duct 110, 120 between the first end of the air conduit or duct 110, 120 and the second end of the air conduit or duct 110, 120 comprises a thermal insulation material and/or electrical insulation material.

According to an example, an air intake or vent 100 is located in a wall of the second compartment 30, and the wall separates the second compartment from ambient or wherein the wall separates the second compartment from a third compartment (50).

In an example, the first compartment is a circuit breaker compartment.

In an example, the first compartment is a cable connection compartment.

In an example, the second compartment is a busbar compartment.

In an example, a new design of low or medium voltage switchgear, comprises:
- a first compartment 20;
- a second compartment 40;
- a third compartment 30;
- a first air conduit or duct 110; and
- a second air conduit or duct 120.

An air intake or vent 60 is located in an outer wall of the first compartment 20, and the outer wall separates the first compartment 20 from ambient. An air intake or vent 90 is located in an outer wall of the second compartment 40, and the outer wall separates the second compartment 40 from ambient. An air intake or vent 130 is located in a wall of the third compartment 30, and the wall separates the third compartment from the first compartment. An air intake or vent 140 is located in a wall of the third compartment 30, and the wall separates the third compartment from the second compartment. An opening at a first end of the first air conduit or duct 110 is positioned around the air intake or vent 60 located in the outer wall of the first compartment 20. An opening at a first end of the second air conduit or duct 120 is positioned around the air intake or vent 90 located in the outer wall of the second compartment 40. An opening at a second end of the first air conduit or duct 110 is positioned around the air intake or vent 130 located in the wall of the third compartment 30 that separates the third compartment from the first compartment. An opening at a second end of the second air conduit or duct 120 is positioned around the air intake or vent 140 located in the wall of the third compartment 30 that separates the third compartment from the second compartment.

According to an example, the switchgear is configured to enable ambient air from outside the switchgear to enter the air intake or vent 60 located in the outer wall of the first compartment 20, pass through the first air conduit or duct 110, and exit through the intake or vent 130 located in the wall of the third compartment 30 that separates the third compartment from the first compartment to enter the third compartment 30.

According to an example, the switchgear is configured to enable ambient air from outside the switchgear to enter the air intake or vent 90 located in the outer wall of the second compartment 40, pass through the second air conduit or duct 120, and exit through the intake or vent 140 located in the wall of the third compartment 30 that separates the third compartment from the second compartment to enter the third compartment 30.

In an example, the switchgear is configured to enable ambient air from outside the switchgear to enter the air intake or vent 60 located in the outer wall of the first compartment 20, pass through the first air conduit or duct 110, and exit through the intake or vent 130 located in the wall of the third compartment 30 that separates the third compartment from the first compartment to enter the third compartment 30 without entering a part of the first compartment 20 surrounding the first air conduit or duct 110.

In an example, the switchgear is configured to enable ambient air from outside the switchgear to enter the air intake or vent 90 located in the outer wall of the second compartment 40, pass through the second air conduit or duct 120, and exit through the intake or vent 140 located in the wall of the third compartment 30 that separates the third compartment from the second compartment to enter the third compartment 30 without entering a part of the second compartment 40 surrounding the second air conduit or duct 120.

According to an example, the opening at the first end of the first air conduit or duct 110 is positioned around and makes an air tight seal around the air intake or vent 60 located in the outer wall of the first compartment 20.

According to an example, the opening at the first end of the second air conduit or duct 120 is positioned around and makes an air tight seal around the air intake or vent 90 located in the outer wall of the second compartment 40.

According to an example, the opening at the second end of the first air conduit or duct 110 is positioned around and makes an air tight seal around the air intake or vent 130 located in the wall of the third compartment 30 that separates the third compartment from the second compartment.

According to an example, the opening at the second end of the second air conduit or duct 120 is positioned around and makes an air tight seal around the air intake or vent 140 located in the wall of the third compartment 30 that separates the third compartment from the second compartment.

According to an example, a wall of the first air conduit or duct 110 between the first end of the first air conduit or duct 110 and the second end of the first air conduit or duct 110 is air tight; and wherein a wall of the second air conduit or duct 120 between the first end of the second air conduit or duct 120 and the second end of the second air conduit or duct 120 is air tight.

According to an example, the wall of the first air conduit or duct 110 between the first end of the first air conduit or duct 110 and the second end of the first air conduit or duct 110 comprises a thermal insulation material and/or electrical insulation material.

According to an example, the wall of the second air conduit or duct 120 between the first end of the second air conduit or duct 120 and the second end of the second air conduit or duct 120 comprises a thermal insulation material and/or electrical insulation material

According to an example, an air intake or vent 100 is located in a wall of the third compartment 30, and the wall separates the third compartment from ambient or wherein the wall separates the third compartment from a fourth compartment 50.

In an example, the first compartment is a circuit breaker compartment.

In an example, the second compartment is a cable connection compartment.

In an example, the third compartment is a busbar compartment.

Thus, the new designs make use of air ducts. These ducts guide cold air from ambient air without mixing it with hot air in adjacent compartments to the compartment to be cooled. Therefore, air supplied into a compartments, that previously would have been pre-heated, now remains cold, which greatly increases the cooling potential of the air and improves the cooling of components located in the compartment.

It is to be noted that, the amount of air entering the internal compartment via the ducts can be lower than when just vents/flaps are used, but because the air temperature is lower the cooling potential is actually increased. The duct or ducts can be strategically positioned as required.

The cooling air duct or ducts can be constructed from heat insulating and electrically insulating material, like plastic. This way the air inside the duct remains cold even if the duct passes through hot air or close to hot electric parts. Because plastic is an electrically insulating material, the risk of di-electric effects are eliminated. In some applications this duct, or one of more than one ducts, can be integrated into structural component of the compartment, therefore the material can be also metallic or other components from what the structure of the switchgear is made.

## Claims

1. A low or medium voltage switchgear, comprising:
- a first compartment (20, 40);
- a second compartment (30); and
- an air conduit or duct (110, 120);
wherein an air intake or vent (60, 90) is located in an outer wall of the first compartment (20, 40), and wherein the outer wall separates the first compartment from ambient;
wherein an air intake or vent (130, 140) is located in a wall of the second compartment (30), and wherein the wall separates the second compartment from the first compartment;
wherein an opening at a first end of the air conduit or duct (110, 120) is positioned around the air intake or vent (60, 90) located in the outer wall of the first compartment (20, 40); and
wherein an opening at a second end of the air conduit or duct (110, 120) is positioned around the air intake or vent (130, 140) located in the wall of the second compartment (30).

2. Switchgear according to claim 1, wherein the switchgear is configured to enable ambient air from outside the switchgear to enter the air intake or vent (60, 90) located in the outer wall of the first compartment (20, 40), pass through the air conduit or duct (110, 120), and exit through the intake or vent (130, 140) located in a wall of the second compartment (30) to enter the second compartment (30).

3. Switchgear according to any of claims 1-2, wherein the switchgear is configured to enable ambient air from outside the switchgear to enter the air intake or vent (60, 90) located in the outer wall of the first compartment (20, 40), pass through the air conduit or duct (110, 120), and exit through the intake or vent (130, 140) located in a wall of the second compartment (30) to enter the second compartment (30) without entering a part of the first compartment (20, 40) surrounding the air conduit or duct (110, 120).

4. Switchgear according to any of claims 1-3, wherein the opening at the first end of the air conduit or duct (110, 120) is positioned around and makes an air tight seal around the air intake or vent (60, 90) located in the outer wall of the first compartment (20, 40).

5. Switchgear according to any of claims 1-4, wherein the opening at the second end of the air conduit or duct (110, 120) is positioned around and makes an air tight seal around the air intake or vent (130, 140) located in the wall of the second compartment (30).

6. Switchgear according to any of claims 1-5, wherein a wall of the air conduit or duct (110, 120) between the first end of the air conduit or duct (110, 120) and the second end of the air conduit or duct (110, 120) is air tight.

7. Switchgear according to claim 6, wherein the wall of the air conduit or duct (110, 120) between the first end of the air conduit or duct (110, 120) and the second end of the air conduit or duct (110, 120) comprises a thermal insulation material and/or electrical insulation material.

8. Switchgear according to any of claims 1-7, wherein an air intake or vent (100) is located in a wall of the second compartment (30), and wherein the wall separates the second compartment from ambient or wherein the wall separates the second compartment from a third compartment (50).

9. A low or medium voltage switchgear, comprising:
- a first compartment (20);
- a second compartment (40);
- a third compartment (30);
- a first air conduit or duct (110); and
- a second air conduit or duct (120);
wherein an air intake or vent (60) is located in an outer wall of the first compartment (20), and wherein the outer wall separates the first compartment (20) from ambient;
wherein an air intake or vent (90) is located in an outer wall of the second compartment (40), and wherein the outer wall separates the second compartment (40) from ambient;
wherein an air intake or vent (130) is located in a wall of the third compartment (30), and wherein the wall separates the third compartment from the first compartment;
wherein an air intake or vent (140) is located in a wall of the third compartment (30), and wherein the wall separates the third compartment from the second compartment;
wherein an opening at a first end of the first air conduit or duct (110) is positioned around the air intake or vent (60) located in the outer wall of the first compartment (20);
wherein an opening at a first end of the second air conduit or duct (120) is positioned around the air intake or vent (90) located in the outer wall of the second compartment (40);
wherein an opening at a second end of the first air conduit or duct (110) is positioned around the air intake or vent (130) located in the wall of the third compartment (30) that separates the third compartment from the first compartment; and
wherein an opening at a second end of the second air conduit or duct (120) is positioned around the air intake or vent (140) located in the wall of the third compartment (30) that separates the third compartment from the second compartment.

10. Switchgear according to claim 9, wherein the switchgear is configured to enable ambient air from outside the switchgear to enter the air intake or vent (60) located in the outer wall of the first compartment (20), pass through the first air conduit or duct (110), and exit through the intake or vent (130) located in the wall of the third compartment (30) that separates the third compartment from the first compartment to enter the third compartment (30); and wherein the switchgear is configured to enable ambient air from outside the switchgear to enter the air intake or vent (90) located in the outer wall of the second compartment (40), pass through the second air conduit or duct (120), and exit through the intake or vent (140) located in the wall of the third compartment (30) that separates the third compartment from the second compartment to enter the third compartment (30).

11. Switchgear according to any of claims 9-10, wherein the opening at the first end of the first air conduit or duct (110) is positioned around and makes an air tight seal around the air intake or vent (60) located in the outer wall of the first compartment (20); and wherein the opening at the first end of the second air conduit or duct (120) is positioned around and makes an air tight seal around the air intake or vent (90) located in the outer wall of the second compartment (40).

12. Switchgear according to any of claims 9-11, wherein the opening at the second end of the first air conduit or duct (110) is positioned around and makes an air tight seal around the air intake or vent (130) located in the wall of the third compartment (30) that separates the third compartment from the second compartment; and wherein the opening at the second end of the second air conduit or duct (120) is positioned around and makes an air tight seal around the air intake or vent (140) located in the wall of the third compartment (30) that separates the third compartment from the second compartment.

13. Switchgear according to any of claims 9-12, wherein a wall of the first air conduit or duct (110) between the first end of the first air conduit or duct (110) and the second end of the first air conduit or duct (110) is air tight; and wherein a wall of the second air conduit or duct (120) between the first end of the second air conduit or duct (120) and the second end of the second air conduit or duct (120) is air tight

14. Switchgear according to claim 13, wherein the wall of the first air conduit or duct (110) between the first end of the first air conduit or duct (110) and the second end of the first air conduit or duct (110) comprises a thermal insulation material and/or electrical insulation material; and/or wherein the wall of the second air conduit or duct (120) between the first end of the second air conduit or duct (120) and the second end of the second air conduit or duct (120) comprises a thermal insulation material and/or electrical insulation material

15. Switchgear according to any of claims 9-14, wherein an air intake or vent (100) is located in a wall of the third compartment (30), and wherein the wall separates the third compartment from ambient or wherein the wall separates the third compartment from a fourth compartment (50).
